# EUROPEAN PATENT SPECIFICATION

(11) **EP 0 396 001 B1**
(45) Date of publication and mention of the grant of the patent: **22.06.1994**
(21) Application number: 90107768.5
(22) Date of filing: 24.04.1990
(51) Int. Cl.: A23C 19/045, A23C 19/076, A23C 19/086, A23C 19/08, A23C 19/084

(54) **A method and device for the production of coagulated products**
Verfahren und Vorrichtung für die Herstellung von koagulierten Produkten
Méthode et appareil pour la production de produits se coagulant

(30) Priority: 05.05.1989 IT 2038189
(43) Date of publication of application: 07.11.1990
(73) Proprietor: ROTA GUIDO S.R.L., 29017 Fiorenzuola d'Arda (Piacenza) (IT)
(72) Inventor: Rota, Alberto, I-29017 Fiorenzuola d'Arda (PC) (IT)
(74) Representative: Marietti, Giuseppe

(56) References cited:
- DE-A- 2 759 047
- DE-A- 2 827 257
- PATENT ABSTRACTS OF JAPAN, vol. 11, no. 38(C-401)(2485), 4 February 1987; & JP-A-61205447 (Fuji Oil Co. Ltd.) 11.09.1986
- MILCHWISSENSCHAFT, vol. 44, no. 11, 1989, pages 673-676, München, DE; H.W. Molder et al.: "Production and yield of whole-milk Ricotta manufactured by a continuous process. I. Materials and methods"
- Speer Milchbereitung; VEB 1979
- Cheese and fermented milk foods, 1978
- Kieser Handbuch der chemisch-technischen Apparate 1937

## Description

The present invention concerns a method and a device for the production of coagulated products.

More detailedly the present invention concerns a method and a device for the production of food products such as, for example, dairy products like "ricotta" (cottage cheese) and similar products, obtained by a coagulation process which requires a simultaneous heating of the starting materials.

Plants for the continuous production of cottage cheese are well known, which comprise means for pre-treatment of the starting serum and for preheating to a first temperature, lower than the coagulation temperature, as well as means for coagulating the pre-treated and preheated serum so as to obtain the coagulated product in a continuous flow. This coagulation means consist of a conical-sectioned vessel with the point downwards, into which the pre-treated serum is fed together with an acidic coagulating solution, and means to raise the temperature to that required for coagulation.

Since it is necessary to further raise the temperature of the mixture of serum and acidic coagulating solution to achieve coagulation, there are nozzles in the coagulation vessel to inject steam directly into the acidified serum. The coagulated "ricotta" (cottage cheese) thus obtained floats to the surface of the serum from whence it is removed to be packaged.

The main drawback of this plant is its lack of flexibility. The ricotta (cottage cheese) obtained with this type of plant has a "hard" consistency and forms "grainy" coagulates. It has been ascertained that this consistency of the coagulated products is due to the degree of heating applied to the product in the coagulation vessel.

A regulation of the quantity of the steam inside the vessel does not succeed in producing a sufficiently soft "pasty" product. Furthermore, such types of plant are suitable only for the production of ricotta (cottage cheese) products; they require substantial changes to be used for the production of other dairy products, such as "mascarpone", or other types of cheese.

Indirect heating of acidified milk to prepare standard cheese (but not ricotta) is known in the art, e.g. from Speer Milchbereitung (1977), 302 and from Cheese and Fermented Milk Foods (1978), 97, where steam jackets are disclosed. According to the teachings of these documents direct heating should always be avoided.

Molder et al., Milchwissenschaft, 44 (1989) n. 11, 673-676, disclose a plant and a process for continuous production of ricotta. According to this document, ricotta is obtained by indirectly heating a milk derivative in two steps, and by passing it through small diameter tubes. As for previously disclosed plants, also this plant is suitable to prepare ricotta only.

Moreover, this plant has the drawback of being expensive to build and difficult to operate and to clean.

There is thus the need for a method and device for the controlled production of coagulated products by the regulation of the coagulation temperature, which can be used for producing various kinds of coagulated products.

An object of the present invention is to overcome the problems listed above and to produce a method and a device for the controlled and flexible production of coagulated food products obtained by the coagulation of dairy or similar products.

This object is achieved by a method and a device which allow to very precisely regulate the quantity of heat supplied to the material to be coagulated during the coagulation phase, thus providing a controlled coagulation and enabling the production of various types of dairy products.

In greater detail, the invention concerns a method for the production of coagulated products - ricotta in particular - of the type in which the coagulation phase of starting material involves the heating of the material itself, according to claim 9.

The invention further concerns a device for the production of coagulated products - ricotta in particular - according to claim 1.

The invention will now be described in greater detail with reference to the enclosed drawings which are given as an illustrative but not limitative example and wherein:
- fig.1 is a cross section of the device according to the invention;
- fig.2 is an enlarged view of a detail of the embodiment of fig.1;
- fig.3 is a schematic plan of the device shown in the preceding figures.

As it has been already stated, the principle of the invention provides for the supply of the coagulation vessel for the starting material with means for heating the product at least in part by an indirect manner. Preferably, such indirect heating is obtained by passing steam through a jacket or some similar hollow space shrouding the coagulation container. It has been surprisingly discovered that if the starting temperature during the coagulation phase is brought to the desired level by indirect heating, the coagulated products thus obtained are highly hydrated and show a very soft "pasty" consistency. To better control the final consistency of the coagulated products, a preferred embodiment would include direct heating means of the traditional type to obtain the degree of consistency suited to the type of product being processed.

It should be noted here that although the following specification refers to a plant for the production of ricotta (cottage cheese), the principle of the invention is applicable to any type of starting material which is coagulated by a method requiring the application of heat to obtain such coagulation.

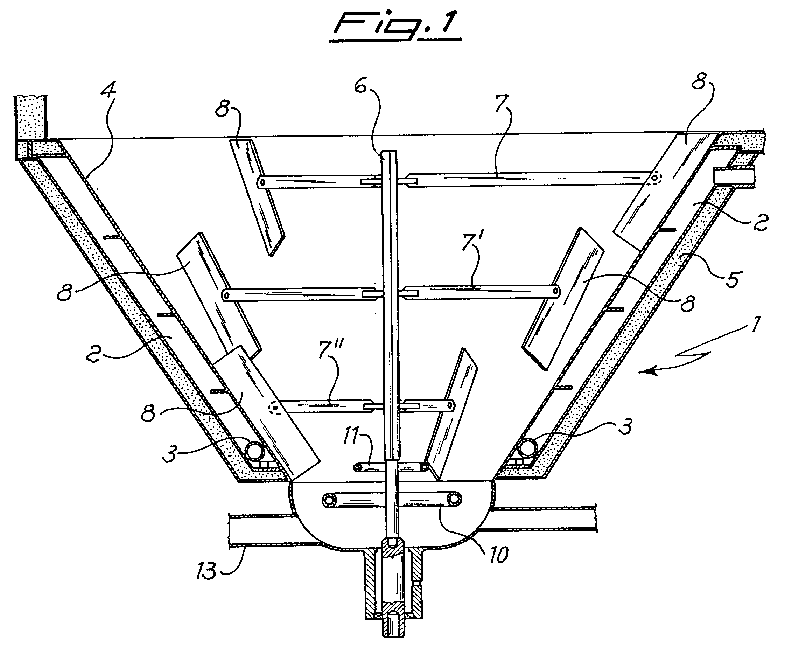

With reference to fig.1, the coagulation vessel 1 is supplied with a jacket 2 enshrouding its walls and within which a heating liquid, preferably steam, is supplied and made to circulate.

Such steam is generally supplied to the jacket or shroud 2 by nozzles 3 at the base of the jacket, so that the steam rises through the condensate formed within the jacket 2, thus giving a uniform distribution of the heat along the walls of the vessel 1.

Externally, the jacket is covered by an insulation layer to insulate it from the enviroument.

To prevent the product from adhering to the walls 4 of the vessel 1, the device according to the present invention is fitted with a reel 6 positioned on the vertical axis of the vessel 1, and supplied with a plurality of arms 7, 7′and 7˝, supporting a corresponding plurality of sweeping scrapers 8 in contact with the surface of the vessel walls 4.

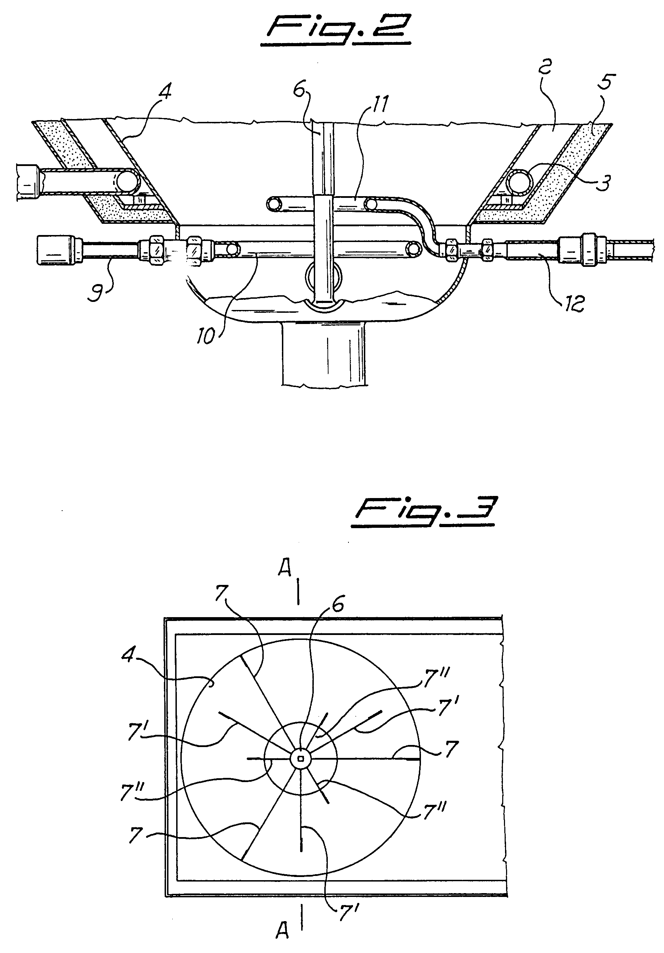

Fig. 3 shows a schematic plan view from above of the layout of the sweep scrapers with respect to the reel 6. As can be seen from figs 1 and 3, the arms of the scrapers are positioned at different heights along the reel 6 and are thus of different lengths. It may also be seen that the arms 7 are arranged at angles of 120 degrees and are the longest, since they are connected to the upper end of the reel 6. Similarly, the arms 7′ and 7˝ are arranged at angles of 120 degrees and are of decreasing length depending on their position on the reel 6.

The reel 6 is driven by a gear train (not shown) or similar device which rotates the reel 6 and the scrapers connected to it at a constant speed. To prevent a negative effect on the coagulation reaction of the product in the vessel, this speed is about 2 rpm.

As it can better be seen from fig.2, which shows a cross-section of the device along the A - A line of fig.3, besides the means for indirectly heating the starting material - through the jacket 2 - also means for directly heating the starting material in the traditional manner are foreseen. Such means consist of a steam feed pipe 9 and a nozzle 10 in correspondence with the lower end of the vessel 1.

Above the steam inlet nozzle, a similar though smaller nozzle 11 is connected to a feed pipe 12 through which the coagulating mixture is supplied to the vessel. Where the product is ricotta (cottage cheese), said mixture is an acidic solution; but it could be any type of coagulant, depending on the starting material.

Inside the vessel there are sensors (not shown) or similar means to detect the temperature during the coagulation phase.

The device is fitted with simple means of regulation, such as valves or the like, to regulate the quantity of heat admitted both directly and indirectly to the material to coagulate. By suitably controlling the steam quantities fed to the jacket 2 or directly blown onto the material through the nozzle 10, the degree of hydration of the coagulated products can be made more or less, according to the ratio between direct and indirect heat. If the heating is predominantly indirect, the coagulated product is very hydrated and "soft"; a prevalent direct heating produces a "harder" product. During the procedure, the material to be coagulated (pre-heated and pre-treated milk serum in the case of ricotta (cottage cheese) is admitted to the lower end of vessel 1 through a feed pipe 13.

Simultaneously, steam is admitted by the nozzles 3 to the jacket 2, and/or through the feed pipe 9 and the nozzles 10 directly to the interior of the vessel. The admission of a coagulation mixture, e.g. an acidic solution in the case of ricotta (cottage cheese), along the line 12 and the nozzle 11, together with the raising of the temperature of the starting material, initiates the coagulation of the material itself with the formation of agglomerates, whose hydration and thus softness and pastiness depends on the ratio between the quantity of steam entering the jacket through nozzle 3 and the quantity passing through nozzle 10.

To avoid the coagulated products from adhering to the walls 4 of the vessel 1, the reel 6 with the attached scrapers is rotated at a predetermined speed, of the order of 2 rpm.

As it has been already remarked, this coagulation device is particularly suited for a plant for the production of ricotta (cottage cheese), containing therefore, together with the device according to the present invention, also means for the pre-treatment of the starting material, mixing it with any additives and, upstream of its admission to the coagulation vessel 1, means for pre-heating the pre-treated starting material, and, downstream of the device according to the present invention, means to remove the coagulated products and despatch the coagulated ricotta (cottage cheese) as obtained inside the vessel 1 to a packaging plant.

From above, it is evident that the coagulation procedure can be controlled by the device according to the present invention in a very simple but at the same time efficient way, thus enabling it to be used not only for the production of ricotta (cottage cheese), but also for the production of other dairy or coagulated products in which the coagulation phase requires the heating of the starting materials.

## Claims

1. A device for preparing ricotta from a starting material of the type comprising a coagulation vessel (1), means to separately feeding to said vessel a coagulating mixture and said starting material, and means for heating said starting material, characterized in that said heating means comprises indirect heating means arranged around the said coagulation vessel, and direct heating means provided within said vessel.

2. A device according to claim 1, wherein said direct heating means comprises a nozzle (10) positioned in said vessel adjacent to said starting material feed pipe (13) and connected to a source of steam.

3. A device according to claim 1 or 2, wherein said indirect heating means comprise a jacket (2) surrounding said vessel (1) and housing a nozzle (3) connected to a source of steam.

4. A device according to any previous claim, wherein said coagulating mixture feeding means comprises a feeding nozzle (11) positioned within said vessel (1), adjacent to said steam nozzle (10).

5. A device according to any claim 1 to 4, characterized in that it further comprises means for scraping the internal surfaces (4) of said vessel (1).

6. A device according to claim 5, characterized in that said scraping means comprises rotating reel (6) with a plurality of scrapers (8) supported by arms (7-7'').

7. A device according to claim 6, characterized in that said reel (6) is rotated by a geared motor at a speed of about two revolutions per minute.

8. A device according to any previous claim, further comprising control means for regulating the amount of heat respectively fed by said direct (10) and indirect (3) heating means, according to the required degree of coagulation of said milk derivative.

9. A method for the production of ricotta product by coagulation of a starting material, the coagulation of said starting material involving its heating and acidification in a coagulation vessel, characterized in controlling said coagulation step by heating said starting material both directly and indirectly.

10. A method according to claim 9, wherein indirect heating is carried out by feeding steam to a jacket (2) or similar hollow space arranged around the coagulation vessel (1).

11. A method according to claim 9, wherein said direct heating is carried out by feeding steam directly to said starting material within said coagulation vessel (1).

12. A method according to claims 9 to 11, wherein the internal surfaces (4) of said coagulation vessel (1) are scraped during said heating and coagulation phase.

13. A method according to any previous claim, wherein the amount of steam fed to said direct (10) and indirect (3) heating means is controlled according to required coagulation degree.

14. A method according to any previous claim, further comprising the phases of pre-heating said starting material and introducing additives before the coagulation phase.

15. A plant for the continuous production of ricotta, characterized in that it comprises a coagulation device according to any claim 1 to 8.

16. A plant according to claim 15, characterized in that it comprises means for pre-heating and carrying-out any addition of additives to the starting material upstream said coagulation device, as well as means for collecting ricotta downstream said device.

## Patentansprüche

1. Vorrichtung zur Herstellung von Ricotta aus einem Ausgangsmaterial, der Bauart mit einem Koagulationsgefäß (1), Mitteln, um getrennt diesem Gefäß eine koagulierende Mischung sowie dieses Ausgangsmaterial zuzuführen und Mittel zum Erhitzen dieses Ausgangsmaterials, dadurch gekennzeichnet, daß dieses Heizmittel indirekte um dieses Koagulationsgefäß herum angeordnete Heizmittel sowie direkte Heizmittel, die innerhalb dieses Gefäßes vorgesehen sind, umfasst.

2. Vorrichtung nach Anspruch 1, dadurch gekennzeichnet, daß dieses direkte Heizmittel eine Düse (10) umfasst, die in diesem Gefäß benachbart diesem Ausgangsmaterialzuführungsrohr (13) positioniert und mit einer Quelle für (Wasser) Dampf verbunden ist.

3. Vorrichtung nach einem der Ansprüche 1 oder 2, dadurch gekennzeichnet, daß dieses indirekte Heizmittel einen Mantel (2) umfasst, der dieses Gefäß umgibt, und worin eine mit einer Dampfquelle verbundene Düse (3) untergebracht ist.

4. Vorrichtung nach einem der vorhergehenden Ansprüche, dadurch gekennzeichnet, daß diese Zuführungseinrichtung für das koagulierende Gemisch eine innerhalb dieses Gefäßes (1) benachbart dieser Dampfdüse (10) angeordnete Speisedüse (11) umfasst.

5. Vorrichtung nach einem der Ansprüche 1 bis 4, dadurch gekennzeichnet, daß sie weiterhin Mittel zum Abkratzen der Innenflächen (4) dieses Gefäßes (1) umfasst.

6. Vorrichtung nach Anspruch 5, dadurch gekennzeichnet, daß dieses Kratzmittel eine sich drehende Hülse bzw. Spindel (6) mit einer Vielzahl von durch Arme (7-7'') getragenen Kratzern (8) umfasst.

7. Vorrichtung nach Anspruch 6, dadurch gekennzeichnet, daß diese Hülse oder diese Spindel (6) von einem Getriebemotor bei einer Geschwindigkeit von etwa 2 Umdrehungen/Minute gedreht wird.

8. Vorrichtung nach einem der vorhergehenden Ansprüche, weiterhin Regelmittel umfassend, um die Wärmemenge zu steuern, die jeweils durch diese direkten (10) und indirekten (3) Heizmittel entsprechend dem gewünschten Grad der Koagulation dieses Milchderivats erforderlich ist.

9. Verfahren zur Herstellung eines Ricotta-Produkts durch Koagulation eines Ausgangsmaterials, wobei die Koagulation dieses Ausgangsmaterials das Erwärmen und Säuern in einem Koagulationsgefäß umfasst, dadurch gekennzeichnet, daß dieser Koagulationsschritt durch Erwärmen dieses Ausgangsmaterials sowohl direkt wie indirekt geregelt wird.

10. Verfahren nach Anspruch 9, dadurch gekennzeichnet, daß die indirekte Erwärmung durchgeführt wird, indem Dampf einem Mantel (2) oder einem ähnlich hohlen Raum zugeführt wird, der um das Koagulationsgefäß (1) herum angeordnet ist.

11. Verfahren nach Anspruch 9, dadurch gekennzeichnet, daß diese direkte Erwärmung durchgeführt wird, indem (Wasser) Dampf direkt diesem Ausgangsmaterial innerhalb dieses Koagulationsgefäßes (1) zugeführt wird.

12. Verfahren nach einem der Ansprüche 9 bis 11, wobei die Innenflächen (4) dieses Koagulationsgefässes (1) während dieser Heiz- und Koagulationsphase abgekratzt werden.

13. Verfahren nach einem der vorhergehenden Ansprüche, wobei die Menge an diesen direkten (10) und indirekten (3) Heizmitteln zugeführtem Dampf entsprechend dem geforderten Koagulationsgrad geregelt wird.

14. Verfahren nach einem der vorhergehenden Ansprüche, weiterhin die Phasen des Vorwärmens dieses Ausgangsmaterials und des Einführens der Additive vor der Koagulationsphase umfassend.

15. Anlage für die kontinuierliche Herstellung von Ricotta, dadurch gekennzeichnet, daß sie eine Koagulationsvorrichtung nach einem der Ansprüche 1 bis 8 umfasst.

16. Anlage nach Anspruch 15, dadurch gekennzeichnet, daß sie Mittel zum Vorwärmen und Durchführen einer beliebigen Zugabe von Additiven zum Ausgangsmaterial in Strömungsrichtung vor dieser Koagulationsvorrichtung sowie Mittel zum Gewinnen des Ricotta in Strömungsrichtung hinter dieser Vorrichtung umfasst.

## Revendications

1. Appareil pour la préparation de ricotta à partir d'une matière première, du type comprenant un récipient de coagulation (1), un moyen pour introduire séparément dans ce récipient un mélange coagulant et cette matière première, et un moyen pour chauffer cette matière première, caractérisé en ce que ce moyen de chauffage comprend un moyen de chauffage indirect disposé autour de ce récipient de coagulation, et un moyen de chauffage direct installé à l'intérieur de ce récipient.

2. Appareil suivant la revendication 1, dans lequel ce moyen de chauffage direct comprend une buse (10) disposée dans ce récipient au voisinage de ce conduit d'alimentation (13) de matière première et raccordée à une source de vapeur.

3. Appareil suivant les revendications 1 ou 2, dans lequel ce moyen de chauffage indirect comprend une chemise (2) entourant ce récipient (1) et dans laquelle est logée une buse (3) raccordée à une source de vapeur.

4. Appareil suivant l'une quelconque des revendications précédentes, dans lequel ce moyen pour l'alimentation du mélange coagulant comprend une buse d'alimentation (11) disposée à l'intérieur de ce récipient (1), au voisinage de cette buse de vapeur (10).

5. Appareil suivant l'une quelconque des revendications 1 à 4, caractérisé en ce qu'il comprend de plus un moyen pour gratter les surfaces internes (4) de ce récipient (1).

6. Appareil suivant la revendication 5, caractérisé en ce que ce moyen de grattage comprend un arbre rotatif (6) muni de plusieurs racloirs (8) portés par des bras (7-7').

7. Appareil suivant la revendication 6, caractérisé en ce que cet arbre (6) est fait tourner par un moteur à engrenage à une vitesse d'environ 2 tours par minute.

8. Appareil suivant l'une quelconque des revendications précédentes, comprenant de plus un moyen de commande pour réguler la quantité de chaleur fournie respectivement par ce moyen de chauffage direct (10) et ce moyen de chauffage indirect (3), en fonction du degré de coagulation requis de ce dérivé du lait.

9. Procédé pour la production de ricotta par coagulation d'une matière première, la coagulation de cette matière première impliquant son chauffage et son acidification dans un récipient de coagulation, caractérisé par le contrôle de cette étape de coagulation par chauffage de cette matière première à la fois directement et indirectement.

10. Procédé suivant la revendication 9, dans lequel le chauffage indirect est effectué par l'introduction de vapeur dans une chemise (2) ou un espace creux analogue disposé autour du récipient de coagulation.

11. Procédé suivant la revendication 9, dans lequel ce chauffage direct est effectué par l'introduction de vapeur directement dans cette matière première à l'intérieur du récipient de coagulation.

12. Procédé suivant les revendications 9 à 11 dans lequel les surfaces internes (4) de ce récipient de coagulation (1) sont grattées pendant cette phase de chauffage et de coagulation.

13. Procédé suivant l'une quelconque des revendications précédentes, dans lequel la quantité de vapeur introduite dans ce moyen de chauffage direct (10) et dans ce moyen de chauffage indirect (3), est contrôlée en fonction du degré de coagulation requis.

14. Procédé suivant l'une quelconque des revendications précédentes, comprenant de plus les phases de pré-chauffage de cette matière première et d'introduction d'additifs avant la phase de coagulation.

15. Installation pour la production continue de ricotta, caractérisée en ce qu'elle comprend un appareil de coagulation suivant l'une quelconque des revendications 1 à 8.

16. Installation suivant la revendication 15, caractérisée en ce qu'elle comprend un moyen pour le pré-chauffage et la réalisation d'une quelconque addition d'additifs à la matière première en amont de cet appareil de coagulation, ainsi qu'un moyen pour collecter le ricotta en aval de cet appareil.
